# EUROPÄISCHE PATENTSCHRIFT

(11) **EP 2 186 415 B1**
(45) Veröffentlichungstag und Bekanntmachung des Hinweises auf die Patenterteilung: **07.05.2014**
(21) Anmeldenummer: 09014011.2
(22) Anmeldetag: 09.11.2009
(51) Int. Cl.: A22C 11/10, B65B 9/12

(54) **Verdrängerbaugruppe für eine Clipmaschine**
Displacement component for a clip machine
Composant de refoulement pour une machine à clips

(30) Priorität: 14.11.2008 DE 102008057293
(43) Veröffentlichungstag der Anmeldung: 19.05.2010
(73) Patentinhaber: Poly-clip System GmbH & Co. KG, 65795 Hattersheim (DE)
(72) Erfinder: Reitz, Jürgen, 65760 Eschborn (DE); Waldstädt, Manfred, 55124 Mainz (DE)
(74) Vertreter: Eisenführ Speiser

(56) Entgegenhaltungen:
- EP-A1- 1 095 570
- DE-B2- 1 586 210
- DE-C2- 2 550 042
- NL-A- 8 900 292
- US-A- 3 328 835

## Beschreibung

Die Erfindung betrifft eine Verdrängerbaugruppe für eine Clipmaschine, insbesondere eine Wurstclipmaschine, gemäß dem Oberbegriff des Anspruchs 1. Ins besondere betrifft die Erfindung eine Verdrängerbaugruppe für eine Clipmaschine, insbesondere eine Wurstclipmaschine, die enthält: wenigstens ein erstes Paar Verdrängerscheren und ein hiezu parallel angeordnetes, zweites Paar Verdrängerscheren, wobei die Verdrängerscheren zum Einschnüren der gefüllten Verpackungshülle zur Bildung eines füllgutfreien Zopfes reversibel aufeinander zu bewegbar sind. Hierbei besteht das erste Verdrängerscherenpaar aus zwei spiegelbildlich zumindest annähernd identischen Verdrängerscheren. Das zweite Verdrängerscherenpaar weist eine erste, den Verdrängerscheren des ersten Verdrängerscherenpaares zumindest annähernd identische Verdrängerschere sowie eine zweite, kürzere Verdrängerschere auf.

Mit einer Clipmaschine der eingangs genannten Art, die beispielsweise aus der DE-Patentschrift 25 50 042 bekannt ist, werden typischerweise mit flüssigem bis zähpastösem oder auch (teilweise) granularem Inhalt befüllte, beutel- oder schlauchförmige Verpackungshüllen verschlossen. Zunächst wird bei diesem Vorgang das Füllgut in die Verpackungshülle eingebracht und - im Fall einer schlauchförmigen Verpackungshülle - danach mittels den z.B. Verdrängerscherenpaaren der Verdrängerbaugruppe in Portionen (Würste) abgeteilt. Die Verdrängerscherenpaare, die um eine gemeinsame Achse in radialer Richtung bzw, quer zur Förderrichtung der Füllguts schwenkbar angeordnet sind, schnüren dazu die Verpackungshülle ein und verdrängen das in dem Einschnürbereich befindliche Füllgut in axialer Richtung bzw. in Förderrichtung des Füllguts. Im Einschnürbereich wird so ein füllgutfreier Schlauchzopf gebildet. Auf dem gebildeten Schlauchzopf werden im nächsten Arbeitstakt ein oder im Falle einer Doppelclipanordnung zwei Verschlussklammern oder Clips nebeneinander mittels der eingangs beschriebenen, gegeneinander bewegbaren Verschließwerkzeuge aufgebracht. Soll das wurstförmige Produkt zum Weitertransport oder zur weiteren Verarbeitung bspw. auf einem Rauchstab aufgehängt werden, wird in eine der Verschlussklammern ein Aufhängeelement, wie eine Fadenschlaufe, eingelegt und mit der Verschlussklammer an dem Schlauchzopf befestigt. Nachdem das wurstförmige Produkt durch Setzen von Verschlussklammern oder Clips verschlossen wurde, werden die Verdrängerscherenpaare wieder auseinander gefahren und der Durchlass des wurstförmigen Produkts ermöglicht.

Aus der EP Patentanmeldung 1 886 573 ist eine Clipmaschine bekannt, bei der die Verdrängerbaugruppe Verdrängerscheren aufweist, die zum Einschnüren der gefüllten Verpackungshülle entlang einer Linearführung reversibel aufeinander zu bewegbar sind.

In der Praxis ist es weiterhin bekannt, dass vor allem bei der Herstellung wurstförmiger Produkte mit einem Aufhängeelement, die unmittelbar nach der Fertigstellung mittels ihres Aufhängeelements automatisch auf einer Aufhängevorrichtung platziert werden sollen, die untere Verdrängerschere des in Förderrichtung des Füllgutes weisenden Verdrängerscherenpaares kürzer gestaltet ist als die übrigen Verdrängerscheren. Das Kürzen dieser Verdrängerschere ist notwendig, um das in der ansonsten geschlossenen Struktur der Verdrängerscheren befindliche, von der Verschlussklammer zwischen den Verdrängerscheren und der Fangvorrichtung in Förderrichtung hinter den Verdrängerscheren gehaltene Aufhängeelement freizugeben.

Aus der DE 34 30 030 ist ein Verfahren und eine Vorrichtung zum Befestigen von Aufhängeelementen an Würsten bekannt. Die Vorrichtung weist ein Einschnürwerkzeug auf mittels dem die gefüllte Wursthülle durch Bilden eines Zopfes unterteilt wird. Auf den Zopf werden in bekannter Weise Verschlussklammern gesetzt. Das Einschnürwerkzeug weist einen oberen und einen unteren Verdrängerscherenarm auf, welche zum Ausführen der Einschnürbewegung reversibel aufeinander zu bewegbar sind. Die Verdrängerscherenarme besitzen gegeneinander weisende V-förmige Ausnehmungen und sind beidseitig in Führungsschienen gelagert. Um ein Zuführen und Befestigen von Schlaufen an der zu verschließenden Wurst zu ermöglichen, weist eine der Führungsschienen auf Höhe der Zopfachse eine Öffnung auf, die mittels eines Schiebers verschließbar ist. Um die Öffnung in der Führungsschiene und/oder die hier durchgeführte Schlaufe nicht zu blockieren oder zu behindern, ist zumindest das in dieser Schiene geführte Ende des unteren Verdrängerscherenarms gekürzt ausgeführt.

Desweiteren geht aus der DE 15 86 210 B2 eine Verdrängerbaugruppe zum Abteilen von Packungen von einem gefüllten Wursthüllenschlauch hervor, die ein einzelnes Verdrängerscherenpaar aufweist. Neben den beiden Verdrängerscheren dieses Paares ist eine dritte Verdrängerschere vorgesehen, die während des Verdrängungsvorganges die gefüllte Verpackungshülle aus der Quetsch- und Scherzone der beiden Scheren in die Mitte des durch die beiden Scheren definierten Mauls bringt. Infolge der Verwendung von insgesamt drei Scheren ist ein erhöhter Steuerungsaufwand notwendig.

Diese vorbekannten Clipmaschinen weisen aber Nachteile auf. So kann es nicht ausgeschlossen werden, dass die verkürzte Verdrängerschere, vor allem bei großen Kalibern der wurstförmigen Produkte und/oder empfindlichen Verpackungshüllen, während des Einschnürvorgangs in die Verpackungshülle eindringt und so eine Falte bildet, die nicht mehr von der Verschlussklammer erfasst werden kann. Auch eine Beschädigung der Verpackungshülle kann nicht ausgeschlossen werden.

Aufgabe der vorliegenden Erfindung ist es, die vorstehend genannten Nachteile zu überwinden und eine Verdrängerbaugruppe für eine Clipmaschine zur Verfügung zu stellen, die den Verschließvorgang prozesssicher gestaltet.

Die Aufgabe wird bei einer Clipmaschine der eingangs genannten Art durch eine erfindungsgemäße Verdrängerbaugruppe gemäß den Merkmalen des Anspruchs 1 gelöst. Weiter vorteilhafte Ausgestaltungen hierzu sind in den Unteransprüchen 2 bis 9 angegeben.

Es wird eine Verdrängerbaugruppe für eine Clipmaschine, insbesondere eine Wurstclipmaschine, vorgeschlagen, die aufweist: wenigstens einem ersten Paar Verdrängerscheren sowie ein hiezu parallel angeordnetes, zweites Paar Verdrängerscheren. Die Verdrängerscheren sind zum Einschnüren der gefüllten Verpackungshülle zur Bildung eines füllgutfreien Zopfes reversibel aufeinander zu bewegbar. Hierbei besteht das erste Verdrängerscherenpaar aus zwei spiegelbildlich zumindest annähernd identischen Verdrängerscheren. Das zweite Verdrängerscherenpaar weist eine zweite, den Verdrängerscheren des ersten Verdrängerscherenpaares zumindest annähernd identische Verdrängerschere sowie eine erste, kürzere Verdrängerschere auf. Erfindungsgemäß ist vorgesehen, dass die erste Verdrängerschere des ersten Verdrängerscherenpaares eine Verstärkung aufweist, die die Kontur des zur Kürzung abgetrennten Teils der ersten Verdrängerschere des zweiten Verdrängerscherenpaares zumindest annähernd nachbildet. In einer vorteilhaften Ausgestaltung der erfindungsgemäßen Verdrängerbaugruppe ist vorgesehen, dass die Verstärkung auf der zu dem zweiten Verdrängerscherenpaar gerichteten Seite der ersten Verdrängerschere des ersten Verdrängerscherenpaares angeordnet ist.

Durch eine solche Verstärkung wird die durch die Kürzung der ersten Verdrängerschere des zweiten Verdrängerscherenpaares zwischen den zusammengefahrenen zweiten Verdrängerscheren der beiden Verdrängerscherenpaare entstandene Lücke geschlossen. Ein Einklemmen oder Beschädigen der Verpackungshülle wir so wirksam verhindert.

Dabei ist es vorteilhaft, wenn zwischen der radial nach außen weisende Fläche der ersten Verdrängerschere des zweiten Verdrängerscherenpaares und der ihr zugewandten Fläche der Verstärkung ein Spalt gebildet wird. Dieser verhindert, dass das vom Schwenkpunkt wegweisende Ende der gekürzten Verdrängerschere mit der Verstärkung kollidiert. Die gekürzte Verdrängerschere kann sich dadurch vollflächig an die erste Verdrängerschere des ersten Verdrängerscherenpaares anlegen.

Um den Einschnürvorgang noch sicherer zu gestalten und Beschädigungen des Verpackungsschlauchs weiter zu minimieren, muss das Spaltmaß auf ein Minimum reduziert werden. Um dennoch ein sicheres und kollisionsfreies Zusammenfahren der Verdrängerscherenpaare zu gewährleisten ist es weiterhin vorteilhaft, wenn der Spalt in einem spitzen Winkel zur Zopfachse ausgerichtet ist.

Die Verstärkung kann auf verschiedene Weise realisiert werden. In einer ersten Ausführung ist die Verstärkung ein Einzelelement, dass auf die zweite Verdrängerschere des ersten Verdrängerscherenpaares geschraubt oder mit dieser verschweißt ist. Die Verstärkung kann, da sie keinen extremen Belastungen ausgesetzt ist, auch durch Kleben oder Nieten an der zweiten Verdrängerschere des ersten Verdrängerscherenpaares befestigt werden. Eine als Einzelelement vorgesehen Verstärkung kann so bei Verdrängerbaugruppen bereits bestehender Clipmaschinen nachgerüstet werden.

Es ist aber ebenso möglich, dass die Verstärkung einstückig mit der ersten Verdrängerschere des ersten Verdrängerscherenpaares verbunden ist. Dies kann beispielsweise dadurch erreicht werden, dass die Verstärkung bereits bei der Herstellung der Verdrängerschere an diese angeformt wird.

Weitere Merkmale und Vorteile der Erfindung werden nachfolgend anhand eines Ausführungsbeispiels mit Hilfe der Zeichnungen näher erläutert. Die während dieser Beschreibung verwendeten Begriffe "links", "rechts", "oben" und "unten" beziehen sich auf die Zeichnungsfiguren in einer Ausrichtung mit normal lesbaren Bezugszeichen bzw. Figurenbezeichnungen.

### Es zeigen:

- Fig. 1: eine Ausführung der Verdrängerscherenpaare der erfindungsgemäßen Verdrängerbaugruppe in einer ersten Position; und
- Fig. 2: die Ausführung der Verdrängerscherenpaare der erfindungsgemäßen Verdrängerbaugruppe entsprechend Figur 1 in einer zweiten Position.

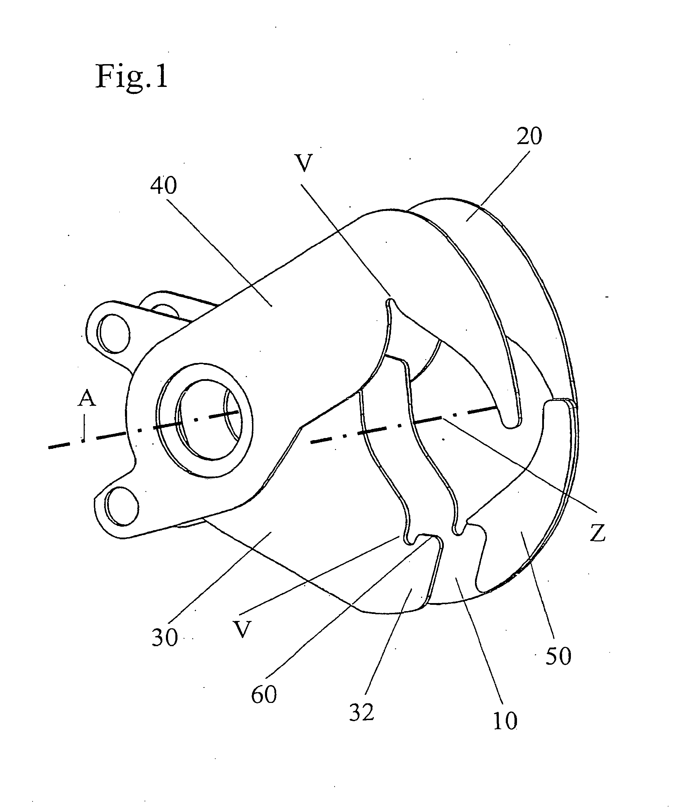

Entsprechend Figur 1 weist die erfindungsgemäße Verdrängerbaugruppe ein erstes Verdrängerscherenpaar 10, 20 sowie ein zweites Verdrängerscherenpaar 30, 40 auf, die parallel zueinander ausgerichtet und um eine gemeinsame Achse A reversibel aufeinander zu schwenkbar angeordnet sind. Zum reversiblen Verschwenken der Verdrängerscheren 10, 20, 30, 40 ist ein in Figur 1 nicht dargestellter Antrieb vorgesehen, der an den von der Schwenkachse A nach links weisenden Enden der Verdrängerscheren 10, 20, 30, 40 angreift. Die jeweils ersten Verdrängerscheren 10, 30 und die zweiten Verdrängerscheren 20, 40 der Verdrängerscherenpaare 10, 20, 30, 40 liegen dabei zumindest annähernd deckungsgleich nebeneinander. Die von der gemeinsamen Schwenkachse A in Richtung der Zopfachse Z weisenden Enden der Verdrängerscheren sind hakenförmig so abgewinkelt, dass die Enden der ersten und zweiten Verdrängerscheren 10, 30 und 20, 40 zueinander gerichtet sind, wobei ihre Spitzen geringfügig überlappen.

Wie der Figur 1 entnehmbar ist, ist die erste Verdrängerschere 30 des zweiten Verdrängerscherenpaares 30, 40 kürzer als die erste Verdrängerschere 10 des ersten Verdrängerscherenpaare 10, 20. Die Verdrängerschere 30 endet von der Achse A aus gesehen unmittelbar hinter der Vertiefung V in einem Endabschnitt 32.

An der zu der Verdrängerschere 30 weisenden Seite der Verdrängerschere 10 ist eine Verstärkung 50 angebracht. Die plattenförmige Verstärkung oder Platte 50 entspricht in ihrer Dicke und ihrer Kontur dem Abschnitt der Verdrängerschere 10, an dem sie befestigt ist und an dem sie deckungsgleich vollflächig anliegt.

Figur 1 zeigt die Verdrängerscherenpaare 10, 20 und 30, 40 in einer ersten Position oder Bereitschaftsposition, in der die Verdrängerscheren 10, 20, 30, 40 sowohl in axialer Richtung als auch in radialer Richtung auseinander gefahren sind.

Wie aus Figur 1 deutlich hervorgeht, ist die erste Verdrängerschere 30 des zweiten Verdrängerscherenpaares 30, 40 gegenüber der ersten Verdrängerschere 10 des ersten Verdrängerscherenpaares 10, 20 verkürzt. Die dieser Verkürzung entsprechende Platte 50 ist auf der zum zweiten Verdrängerscherenpaar 30, 40 weisenden Seite der Verdrängerschere 10 angeordnet und mit dieser fest verbunden.

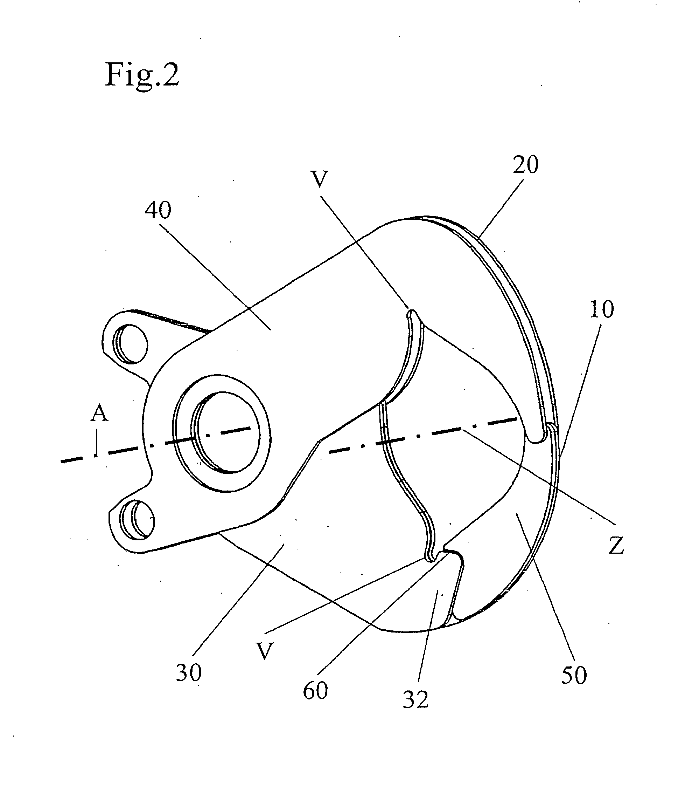

In Figur 2 sind die Verdrängerscheren 10, 20, 30, 40 der erfindungsgemäßen Verdrängerbaugruppe in einer zweiten Position oder Einschnürposition dargestellt. In dieser Position sind die Verdrängerscherenpaare 10, 20 und 30, 40 axial bezogen auf die Schwenkachse A soweit aufeinander zugefahren, dass die ersten Verdrängerscheren 10, 30 der Verdrängerscherenpaare 10, 20 und 30, 40 mit ihren aufeinander zu weisenden Seitenflächen aneinander liegen.

Dabei ist deutlich zu erkennen, dass die Verstärkung 50 in ihrer Kontur annähernd identisch ist mit dem Teil, um das die Verdrängerschere 30 gekürzt worden ist. Die aufeinander zuweisenden Stirnflächen des Endabschnitts 32 der Verdrängerschere 30 und der Platte 50 schließen zwischen einander den Spalt 60 ein. Dieser verhindert eine Kollision oder ein Verhaken der Verdrängerscheren 10, 30 beim Spreizen oder Zusammenfahren der Verdrängerscherenpaare 10, 20, 30, 40. Um diese Wirkung zu verbessern, ist der Spalt 60 in einem spitzen Winkel zu einer senkrecht durch die Zopfachse Z verlaufenden Ebene ausgerichtet. Dabei schließen der Spalt 60 und die in Figur 2 sichtbare Vorderseite der Verdrängerschere 30 einen Winkel ein, der sich mit dem vorbeschriebenen spitzen Winkel zu einem rechten Winkel ergänzt.

Da die Verstärkung 50 auch in ihrer Dicke mit dem Teil, um das die Verdrängerschere 30 gekürzt worden ist, übereinstimmt, liegen die in Figur 2 sichtbaren Vorderseiten der Verdrängerschere 30 und der Platte 50 in einer Ebene. Hierdurch wird erreicht, dass die an dieser Fläche entlang gleitende Verdrängerschere 40 ohne Widerstand über den zwischen der Verdrängerschere 40 und der Platte 10 Spalt gebildeten 30 geführt werden kann, ohne am Spalt 60 zu verhaken. Um ein problemloses Einschnüren zu gewährleisten und ein Verhaken der Verdrängerschere an dem Spalt 30 sicher zu verhindern, kann die Platte 10 geringfügig dicker sein als der Endabschnitt 32 der Verdrängerschere 30.

Die Verstärkung oder Platte 50 füllt dabei den Raum aus, der durch die Kürzung der Verdrängerschere 30 entstanden ist, wenn die Verdrängerschere 30 an der Verdrängerschere 10 anliegt. Das heißt, sie reicht von den Endabschnitt 32 der Verdrängerschere 30 bis zu der Spitz des hakenförmig abgewinkelten Endes der Verdrängerschere 10.

Die in Figur 2 gezeigten Verdrängerscherenpaare 10, 20, 30, 40 sind in Einschnürposition dargestellt, in der die Verdrängerscherenpaare 10, 20 und 30, 40 in axialer Richtung, bezogen auf die Zopfachse Z, zusammengefahren, aber radial noch gespreizt sind. Aus dieser Position beginnt der Einschnürvorgang an dem hier nicht dargestellten, gefüllten Verpackungsschlauch. Der Einschnürvorgang endet, wenn der Durchmesser der gefüllten Verpackungshülle soweit reduziert ist, dass sich kein Füllgut mehr in den eingeschnürten Bereich bzw. Zopf befindet. Der aus gerafftem Verpackungsschlauch gebildete Zopf füllt dabei die aus den Vertiefungen V der zusammengefahrenen Verdrängerscheren 10, 20, 30, 40 gebildete Verdrängerloch aus. Anschließend beginnt das axiale Spreizen, d.h. die Verdrängerscherenpaare 40, 50 und 60, 70 werden in Zopfrichtung auseinander gefahren. Weiteres Füllgut wird verdrängt und es bildet sich zwischen den Verdrängerscherenpaaren 10, 20 und 30, 40 ein füllgutfreier Zopf, auf den ein bzw. zwei nicht weiter dargestellte Verschlussklammern bzw. Clips gesetzt werden können. Anschließend werden die Verdrängerscheren 10, 20, 30, 40 radial auseinander gefahren. Damit ist die in Figur 1 dargestellte Bereitschaftsposition erreicht, in der die Zopfenden freigegeben werden. Das fertiggestellte wurstförmigen Produkt kann aus der Clipmaschine ausgetragen werden und ein neues wurstförmiges Produkt kann durch einen nachfolgenden Füllvorgang gebildet werden.

Durch das Vorsehen der Verstärkung 50 auf der Verdrängerschere 10 wird der Freiraum aufgefüllt, der durch den Einsatz einer der verkürzten Verdrängerschere 30 entsteht. Wenn sich die Verdrängerscherenpaare 10, 20 und 30, 40 in der Einschnürposition entsprechend Figur 2 befinden, liegt die Spitze der Verdrängerschere 40 auf der Verstärkung 50, entlang der die Verdrängerschere 40 während des Einschnürens geführt wird, bis sie die gekürzte Verdrängerschere 30 erreicht. Durch das Auffüllen des Freiraums durch die Verstärkung 50 wird verhindert, dass sich hier Verpackungsschlauch einklemmt oder sich an dem Endabschnitt 32 der gekürzten Verdrängerschere 30 verhakt.

Befinden sich die Verdrängerscherenpaare 10, 20 und 30, 40 in der Bereitschaftsposition, kann das eben fertiggestellte wurstförmige Produkt aus der Clipmaschine ausgetragen werden. Ein Einfädeln des Aufhängeelements des wurstförmigen Produkts ist hierbei durch die gekürzte Verdrängerschere 30 ausgeschlossen.

Es ist anzumerken, dass eine so gestaltete Verdrängerbaugruppe nicht auf die Herstellung großkalibriger wurstförmiger Produkte und/oder solcher in besonders empfindlichem Verpackungsschlauch beschränkt ist, sondern zur Herstellung von wurstförmigen Produkten jeden Kalibers und jeden Verpackungsschlauchmaterials geeignet ist.

Die Verstärkung 50 kann prinzipiell aus dem gleichen Material, wie die Verdrängerscherenpaare 10, 20 und 30, 40 bestehen. Bestehen diese aus Metall, kann die Verstärkung 50 an die Verdrängerschere 10 angeschweißt werden. Die Verstärkung 50 kann aber auch aus Kunststoff besten. In diesem Fall kann sie an die Verdrängerschere 10 angeschraubt sein. Da auf die Verstärkung 50 keine extremen Kräfte wirken, kann es auch genügen, die Verstärkung 50 auf die Verdrängerschere 10 aufzukleben.

Es ist weiterhin möglich, an jeder Verdrängerbaugruppe, die die vorbeschriebenen Verdrängerscherenpaare aufweist, eine erfindungsgemäße Verstärkung nachzurüsten. Im einfachsten Fall kann der von der Verdrängerschere 30 abgetrennte Teil als Verstärkung 50 auf die hintere Verdrängerschere 10 aufgebracht werden.

Die Erfindung wurde vorstehend am Beispiel von um eine gemeinsame Achse schwenkbaren und zum Einschnüren radial aufeinander zu bewegbaren Verdrängerscheren beschrieben. Die Erfindung lässt sich selbstverständlich auch an linear, reversibel aufeinander zu bewegbaren Verdrängerscheren verwirklichen.

Die linear arbeitenden Verdrängerscheren weisen eine zur Zopfachse gerichtete V-förmige Ausnehmung, die von seitlich danebenliegenden Spitzen gebildet wird, auf. Erfindungsgemäß kann eine der zur Zopfachse weisenden Spitzen der idR. unteren Verdrängerschere gekürzt werden. Eine dieser Kürzung entsprechende Verstärkung wird dann auf der zugehörigen, dann oberen, Verdrängerschere angeordnet.

Die Anordnung der Spaltes zwischen der gekürzten Verdrängerschere und der Verstärkung entspricht der im Ausführungsbeispiel entsprechend den Zeichnungsfiguren.

## Patentansprüche

1. Verdrängerbaugruppe für eine Clipmaschine, insbesondere eine Wurstclipmaschine, mit wenigstens einem ersten Paar Verdrängerscheren (10, 20) und einem hiezu parallel angeordneten, zweiten Paar Verdrängerscheren (30, 40), wobei die Verdrängerscheren (10, 20, 30, 40) zum Einschnüren der gefüllten Verpackungshülle zur Bildung eines füllgutfreien Zopfes reversibel aufeinander zu bewegbar sind, und wobei das erste Verdrängerscherenpaar (10, 20) aus zwei spiegelbildlich zumindest annähernd identischen Verdrängerscheren (10, 20) besteht und das zweite Verdrängerscherenpaar (30, 40) eine zweite, den Verdrängerscheren (10, 20) des ersten Verdrängerscherenpaares (10, 20) zumindest annähernd identische Verdrängerschere (40) sowie eine erste, kürzere Verdrängerschere (30) aufweist,
**dadurch gekennzeichnet, dass** die erste Verdrängerschere (10) des ersten Verdrängerscherenpaares (10, 20) eine Verstärkung (50) aufweist, die die Kontur des zur Kürzung abgetrennten Teils der ersten Verdrängerschere (30) des zweiten Verdrängerscherenpaares (30, 40) zumindest annähernd nachbildet.

2. Verdrängerbaugruppe nach Anspruch 1,
**dadurch gekennzeichnet, dass** die Verstärkung (50) auf der zu dem zweiten Verdrängerscherenpaar (30, 40) gerichteten Seite der ersten Verdrängerschere (10) des ersten Verdrängerscherenpaares (10, 20) angeordnet ist.

3. Verdrängerbaugruppe nach Anspruch 1 oder 2,
**dadurch gekennzeichnet, dass** die Verstärkung (50) so gestaltet ist, dass zwischen der radial nach außen weisende Fläche der ersten Verdrängerschere (30) der zweiten Verdrängerscherenpaares (30, 40) und der ihr zugewandten Fläche der Verstärkung (50) ein Spalt (60) gebildet wird.

4. Verdrängerbaugruppe nach Anspruch 3,
**dadurch gekennzeichnet, dass** der Spalt (60) in einem spitzen Winkel zur Zopfachse Z ausgerichtet ist.

5. Verdrängerbaugruppe nach einem der Ansprüche 1 bis 3,
**dadurch gekennzeichnet, dass** die Verstärkung (50) auf die erste Verdrängerschere (10) des ersten Verdrängerscherenpaares (10, 20) geschraubt ist.

6. Verdrängerbaugruppe nach einem der Ansprüche 1 bis 3,
**dadurch gekennzeichnet, dass** die Verstärkung (50) mit der ersten Verdrängerschere (10) des ersten Verdrängerscherenpaares (10, 20) verschweißt ist.

7. Verdrängerbaugruppe nach einem der Ansprüche 1 bis 3,
**dadurch gekennzeichnet, dass** die Verstärkung (50) einstückig mit der ersten Verdrängerschere (10) des ersten Verdrängerscherenpaares (10, 20) verbunden ist.

8. Verdrängerbaugruppe nach einem der Ansprüche 1 bis 7,
**dadurch gekennzeichnet, dass** die Verdrängerscheren (10, 20, 30, 40) der Verdrängerscherenpaare (10, 20, 30, 40) um eine gemeinsame Achse (A) schwenkbar, radial reversibel aufeinander zu bewegbar sind.

9. Verdrängerbaugruppe nach einem der Ansprüche 1 bis 7,
**dadurch gekennzeichnet, dass** die Verdrängerscheren (10, 20, 30, 40) der Verdrängerscherenpaare (10, 20, 30, 40) linear, radial reversibel aufeinander zu bewegbar sind.

## Claims

1. A displacement component for a clip machine, in particular a sausage clip machine, comprising at least one first pair of displacement arms (10, 20) and one second pair of displacement arms (30, 40) arranged parallel thereto, wherein the displacement arms (10, 20, 30, 40) are reversibly movable towards each other for constricting the filled casing to form an unstuffed tip, and wherein the first pair of displacement arms (10, 20) consists of two displacement arms (10, 20) that are at least approximately identical mirror images of each other and the second pair of displacement arms (30, 40) comprises a second displacement arm (40) at least approximately identical to the displacement arms of the first pair of displacement arms (10, 20), and a first, shorter displacement arm (30),
**characterized in that** the first displacement arm (10) of the first pair of displacement arms (10, 20) has a reinforcement (50) which imitates at least approximately the outline of that part of the first displacement arm (30) of the second pair of displacement arms (30, 40) which is cut off in order to shorten said first displacement arm (30).

2. The displacement component according to claim 1,
**characterized in that** the reinforcement (50) is disposed on the side of the first displacement arm (10) of the first pair of displacement arms (10, 20) which faces the second pair of displacement arms (30, 40).

3. The displacement component according to claim 1 or 2,
**characterized in that** the reinforcement (50) is shaped such that a gap (60) is formed between the radially outwardly facing area of the first displacement arm (30) of the second pair of displacement arms (30, 40) and the area of the reinforcement (50) which faces it.

4. The displacement component according to claim 3,
**characterized in that** the gap (60) is oriented at an acute angle to the tip axis Z.

5. The displacement component according to any one of claims 1 to 3,
**characterized in that** the reinforcement (50) is screwed onto the first displacement arm (10) of the first pair of displacement arms (10, 20).

6. The displacement component according to any one of claims 1 to 3,
**characterized in that** the reinforcement (50) is welded to the first displacement arm (10) of the first pair of displacement arms (10, 20).

7. The displacement component according to any one of claims 1 to 3,
**characterized in that** the reinforcement (50) is integrally joined to the first displacement arm (10) of the first pair of displacement arms (10, 20).

8. The displacement component according to any one of claims 1 to 7,
**characterized in that** the displacement arms (10, 20, 30, 40) of the pairs of displacement arms (10, 20, 30, 40) can be moved radially reversibly and pivotably about a common axis (A) towards each other.

9. The displacement component according to any one of claims 1 to 7,
**characterized in that** the displacement arms (10, 20, 30, 40) of the pairs of displacement arms (10, 20, 30, 40) can be moved linearly and radially reversibly towards each other.

## Revendications

1. Module d'embossage pour une machine à agrafe, notamment une machine à agrafe de saucisse, comprenant au moins une première paire de cisailles (10, 20) d'embossage et une deuxième paire (30, 40) de cisailles d'embossage disposée parallèlement à celle-là, les cisailles (10, 20, 30, 40) d'embossage pouvant être déplacées réversiblement l'une sur l'autre réversiblement pour serrer l'enveloppe d'emballage afin de former une tresse sans produit à embosser et dans lequel la première paire (10, 20) de cisailles d'embossage est constituée de deux cisailles (10, 20) d'embossage au moins à peu près identiques symétriquement comme dans un miroir et la deuxième paire (30, 40) de cisailles d'embossage a une deuxième cisaille (40) d'embossage au moins à peu près identique aux cisailles (10, 20) d'embossage de la première paire (10, 20) de cisailles d'embossage, ainsi qu'une première cisaille (30) d'embossage plus courte,
**caractérisé en ce que** la première cisaille (10) d'embossage de la première paire (10, 20) de cisailles d'embossage a un renfort (50) qui reproduit au moins à peu près le contour de la partie séparée pour le raccourcissement de la première cisaille (30) d'embossage de la deuxième paire (30, 40) de cisailles d'embossage.

2. Module d'embossage suivant la revendication 1,
**caractérisé en ce que** le renfort (50) est disposé du côté, tourné vers la deuxième paire (30, 40) de cisailles d'embossage, de la première cisaille (10) d'embossage de la première paire (10, 20) de cisailles d'embossage.

3. Module d'embossage suivant la revendication 1 ou 2,
**caractérisé en ce que** le renfort (50) est conformé de manière à former un intervalle (60) entre la surface, tournée radialement vers l'extérieur, de la première cisaille (30) d'embossage de la deuxième paire (30, 40) de cisailles d'embossage et la surface tournée vers elle du renfort (50).

4. Module d'embossage suivant la revendication 3,
**caractérisé en ce que** l'intervalle (60) fait un angle aigu avec l'axe Z de la tresse.

5. Module d'embossage suivant l'une des revendications 1 à 3,
**caractérisé en ce que** le renfort (50) est vissé sur la première cisaille (10) d'embossage de la première paire (10, 20) de cisailles d'embossage.

6. Module d'embossage suivant l'une des revendications 1 à 3,
**caractérisé en ce que** le renfort (50) est soudé à la première cisaille (10) d'embossage de la première paire (10, 20) de cisailles d'embossage.

7. Module d'embossage suivant l'une des revendications 1 à 3,
**caractérisé en ce que** le renfort (50) est d'un seul tenant avec la première (10) cisaille d'embossage de la première paire (10, 20) de cisailles d'embossage.

8. Module d'embossage suivant l'une des revendications 1 à 7,
**caractérisé en ce que** les cisailles (10, 20, 30, 40) d'embossage des paires (10, 20, 30, 40) de cisailles d'embossage peuvent se déplacer l'une sur l'autre d'une manière réversible radialement, en pouvant pivoter autour d'un axe (A) commun.

9. Module d'embossage suivant l'une des revendications 1 à 7,
**caractérisé en ce que** les cisailles (10, 20, 30, 40) d'embossage des paires (10, 20, 30, 40) de cisailles d'embossage peuvent se déplacer l'une sur l'autre d'une manière réversible radialement de façon linéaire.
